# EUROPEAN PATENT APPLICATION

(11) **EP 2 380 697 A1**
(43) Date of publication of application: **26.10.2011**
(21) Application number: 09837538.9
(22) Date of filing: 13.11.2009
(51) Int. Cl.: B23Q 17/22, B23Q 11/00, B23Q 17/24

(54) **TOOL CLEANING DEVICE FOR MACHINE TOOL**

(30) Priority: 06.01.2009 JP 2009000490
(71) Applicant: Mitsubishi Heavy Industries, Ltd., Tokyo 108-8215 (JP)
(72) Inventor: SATO Yoshikatsu, Ritto-shi Shiga 520-3080 (JP)
(74) Representative: Henkel, Breuer & Partner
(86) International application number: PCT/JP2009/069336
(87) International publication number: WO 2010/079652

(57) **Abstract**

A tool cleaning device for a machine tool, wherein the tool cleaning device removes foreign matters (4) adhered on a tool (3) before measuring dimensions of the tool (3) and comprises a CCD camera (18) for taking an image of a front edge of the tool 3 from a side direction of the tool (3), a tool cleaning portion (20) for cleaning the tool (3) by jetting cleaning agent toward the tool (3) and a control device (21) for judging whether the foreign matters (4) are adhered on the tool (3) based on the image taken by the CCD camera (18) and controls the tool cleaning portion (20) in response to the result of a judgment so as to remove the foreign matters (4) adhered on the tool (3) certainly and exactly.

## Description

### Field of the Invention

The present invention relates to a tool cleaning device for a machine tool so as to remove foreign matters adhered on a tool before measuring a dimension of the tool of the machine tool.

### Background of the Invention

In machinery processing of a machine tool, tool dimensions (a tool length, a tool diameter and so on) are measured before processing a workpiece. Based on the measured tool dimensions, it is considered that the tool is worn away or not. Then, the workpiece is begun to be processed with high accuracy.

Recently, it is required high accuracy for a machine tool. In accordance with such a request, non-contact type laser measurement devices have been broadly employed comparing with contact type measurement devices since the non-contact type laser measurement devices can process a workpiece with high processing accuracy.

In the case that tool dimensions are measured with a laser measurement device, oil, grinding swarf, dust and so on (hereinafter, it is called as "foreign matters") adhered on a tool are baneful influence to an accurate degree of the tool measurement. Therefore, before measuring the tool dimensions, the tool has to be cleaned by jetting air stream blown from an air blower toward the tool and removing the foreign matters in order to reduce measurement tolerance. However, it is well known that foreign matters can not be completely removed by cleaning with the air blower.

In order to reduce such a measurement tolerance, for example, the patent document 1 discloses a tool cleaned by jetting degrease cleaning agent. Thus, an oily layer is removed before measuring the tool dimensions with a laser measuring device and then dimensions of the tool are measured by the laser measuring device.

### Prior Art

### Patent Document

**Patent document 1:**
   Japanese Patent Unexamined Publication No. 2005-66746

### Summary of the Invention

### Subject to be solved by the Invention

In the case of utilizing degrease cleaning agent as disclosed in patent document 1, measurement tolerance is caused by remained cleaning agent adhered on a tool. In order to avoid such a case, it is necessary for cleaning agent to provide a volatile characteristic or a speed drying characteristic. However, the cleaning agent having a volatile characteristic or a speed drying characteristic is apt to be dangerous, that is, combustible or harmful to human body. Particularly, in a machine tool having an automatic tool exchange function, cleaning agent had to be prepared in the all working period. Therefore, it is preferable not to utilize dangerous degrease cleaning agent.

In addition, in a cleaning device disclosed in the patent document 1, it is impossible to check whether foreign matters adhered on a tool are completely removed or not. Therefore, a cleaning time period and the other factors are determined based on various experiences. Thus, the tool is measured based on a surmise that foreign matters are removed so that it is difficult to avoid for occurring measurement tolerance.

In order to resolve the above problem, a purpose of the present invention is to provide a tool cleaning device for a machine tool, wherein the cleaning machine is capable of removing foreign matters adhered on a tool certainly.

### Means to solve the Subject

In order to solve the above subject, in a tool cleaning device for a machine tool according to the first invention, the tool cleaning device for removing foreign matters adhered on a tool before measuring dimensions of the tool, the tool cleaning device is characterized of comprising image taking means for taking an image of a front end of a tool from a side direction, tool cleaning means for cleaning the tool by jetting cleaning agent toward the tool and control means for judging whether the foreign matters are attached on the tool in accordance with the image taken by the image taking means and controlling the tool cleaning means in accordance with a fact whether the foreign matters are still adhered on the tool.

In a tool cleaning device for the machine tool according to the second invention, the tool cleaning device as recited in the first invention is characterized of comprising display means for displaying the image taken by the image taking means.

In a tool cleaning device for the machine tool according to the third invention, the tool cleaning device as recited in the first invention or the second invention is characterized in that the control means judges whether foreign matters are still adhered on the tool by comparing with a shape of the tool previously set.

In a tool cleaning device for the machine tool according to the fourth invention, the tool cleaning device as recited in the third invention is characterized in that the control means control the tool cleaning means by considering the maximum cleaning number previously set.

In a tool cleaning device for the machine tool according to the fifth invention, the tool cleaning device as recited in the fourth invention is characterized in that the control means alarms in the case that cleaning times for the tool by the tool cleaning means is more than the maximum cleaning times.

In a tool cleaning device in the machine tool according to the sixth invention, the tool cleaning device as recited in the first invention is characterized in that the control means measure dimensions of the tool in the case that it is judged no foreign matters adhered on the tool.

### Effect of the Invention

According to the tool cleaning device for a machine tool according to the first invention, the tool cleaning device for removing foreign matters adhered on a tool before measuring dimensions of the tool, the tool cleaning device is characterized of comprising image taking means for taking an image of a front end of a tool from a side direction, tool cleaning means for cleaning the tool by jetting cleaning agent toward the tool and control means for judging whether the foreign matters are attached on the tool in accordance with the image taken by the image taking means and controlling the tool cleaning means in accordance with a fact whether the foreign matters are still adhered on the tool so that a redundant cleaning with respect to a tool on which foreign matters are not adhered can be prevented and an operation for cleaning the tool on which foreign matters are still adhered is not stopped until the remained foreign matters are completely removed. The tool is cleaned in the most suitably way.

According to the tool cleaning device for the machine tool according to the second invention, display means for displaying the image is taken by the image taking means so that foreign matters adhered on the tool can be observed through the display. It is very convenient for an operator.

According to the tool cleaning device for the machine tool according to the third invention, the control means judges whether foreign matters are still adhered on the tool by comparing with a shape of the tool previously set so that detection whether the foreign matters are adhered on the tool can be accomplished with high accuracy.

According to the tool cleaning device for the machine tool according to the fourth invention, the control means control the tool cleaning means by considering the maximum cleaning number previously set so that redundant cleaning can be avoided in the case that foreign matters are still adhered on the tool after cleaning the tool several times or some troubles are happening.

According to the tool cleaning device for the machine tool according to the fifth invention, that the control means alarms in the case that cleaning times for the tool by the tool cleaning means is more than the maximum cleaning times so that an abnormal condition can be recognized at an early stage.

According to the tool cleaning device in the machine tool according to the sixth invention, the control means measure dimensions of the tool in the case that it is judged no foreign matters adhered on the tool so that the dimensions of the tool are measured after checking that the foreign matters have not been adhered on the tool already. Thus, the measuring accuracy degree can be improved.

### Brief Description of the Drawings

[Fig. 1] Fig. 1 shows an embodiment of a tool cleaning device for a machine tool according to the present invention.
[Fig. 2] Fig. 2 shows a structure of an embodiment of a device of measuring a dimension of a tool according to the present invention.
[Fig. 3] Fig. 3 is a flow chart for showing a process of an embodiment of a control device according to the present invention.

### Mode to practice the Invention

With reference to the accompanying drawings, it will be described one embodiment of a tool cleaning device according to the present invention for a machine tool in detail hereinafter.

### Embodiment

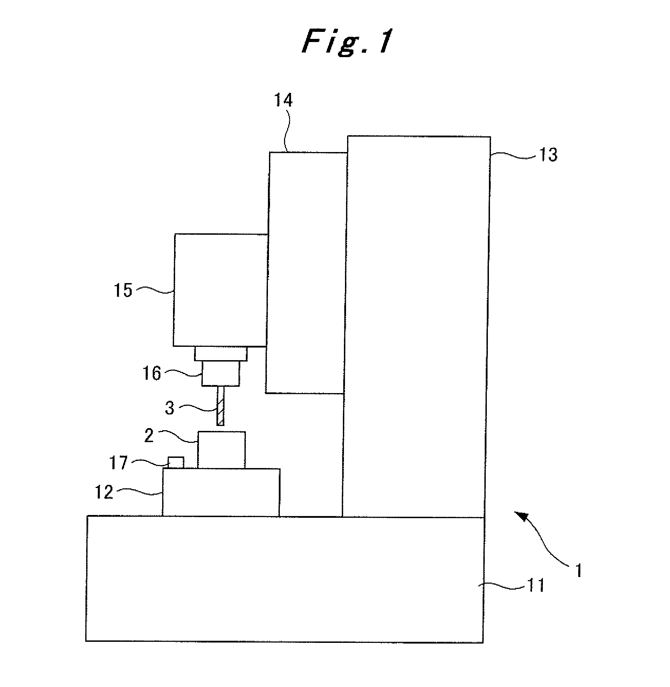

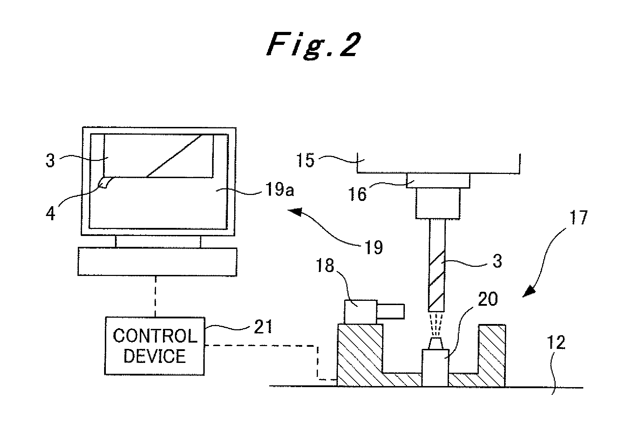

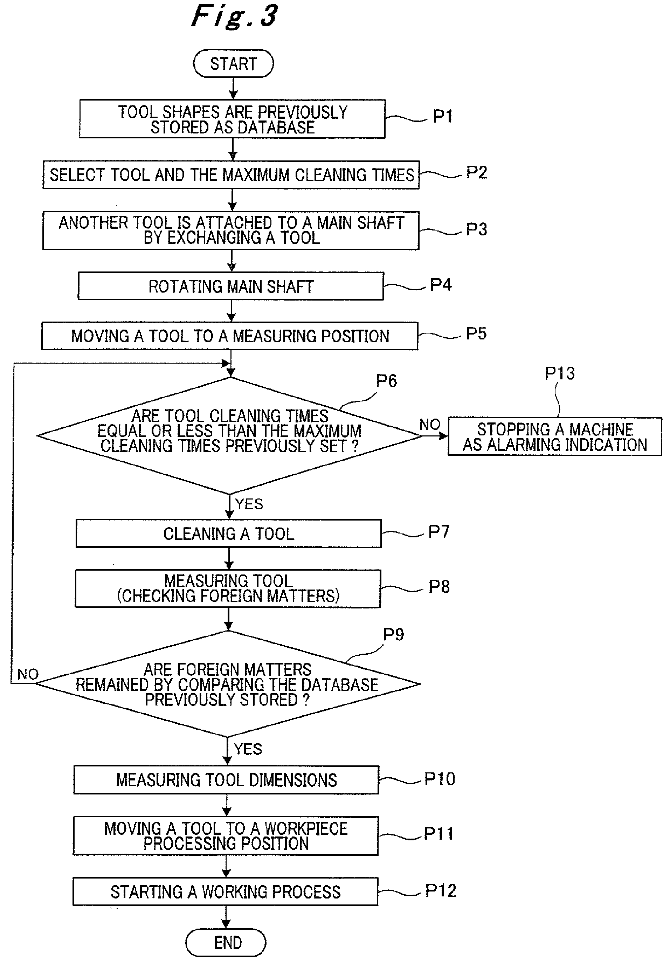

Fig. 1 shows an embodiment of a tool cleaning device for a machine tool according to the present invention. Fig. 2 shows a structure of an embodiment of a device of measuring dimensions of a tool according to the present invention. Fig. 3 is a flow chart for showing a process of an embodiment of a control device according to the present invention.

As shown in Fig. 1, in the machine tool 1 at which a tool cleaning device according to the present invention is adapted, a workpiece is supported on a bed 11 functioned as a base of the machine tool 1 through a table 12. On the other hand, a tool 3 is supported by the machine tool 1 through a column 13, a saddle 14, a main shaft head 15 and a main shaft 16.

At an upper surface of the bed 11, a guide surface is provided. The table 12 is supported by the bed and movable in a front-rear direction along the guide surface. The workpiece 2 is fixed on an upper surface of the table 12 and a tool dimension measuring device 17 having a function as a tool cleaning device is mounted at a corner of the table 12.

The tool dimension measuring device 17 is a device for measuring a tool length of the tool 3. As shown in Fig. 2, the tool dimension device 17 comprises a CCD camera 18 for taking an image, a display member 19 for displaying the image and a tool cleaning device 20 as cleaning means. The tool dimension measuring device 17 constituted by CCD camera 18, the display 19 and the tool cleaning device 20 is connected to a control device 21 as controlling means.

The CCD camera 18 takes a picture of a tip portion of the tool 3 periodically with a predetermined time interval from a side direction with respect to the tool 3, that is, a direction confronting with a peripheral surface of the tool 3. Image data taken by the CCD camera 18 are output to the control device 21. The display device 19 displays the image data input to the control device 21 on a display 19a. The tool cleaning device 20 jets cleaning agent toward the tool 3 in accordance with a command from the control device 21 in order to clean the tool 3. In the embodiment, the cleaning agent is solution.

While a tool dimension of the tool 3 is measured or the workpiece 2 is processed, the control device 21 controls the table 12, the saddle 14, the main shaft head 15 and the main shaft 16. Image data input from the CCD camera is treated so as to judge whether foreign matters are adhered on the tool 3 or not. In accordance with the result whether foreign matters are adhered on the tool 3 or not, an operation for driving the tool cleaning portion 20 is controlled. Simultaneously, in accordance with the image data input from the CCD camera 18, tool dimensions such as a tool length, a tool diameter and so on are computed by treating input images.

On the other hand, the column 13 is mounted on the bed 11 and a guide surface is provided on a front surface of the column 13. The saddle 14 is movable in a front-rear direction along the guide surface and supported by the column 13. The saddle 14 has a guide surface at a front surface of the saddle 14. The main shaft head 15 is movable in a vertical direction along the guide surface and supported by the saddle 14. In the main shaft head 15, the main shaft 16 is rotatably supported and an axial direction of the main shaft 16 is aligned parallel to a vertical direction. At a tip end of the main shaft axis 16, the tool 3 is detachably attached to the main shaft 16a and the tool 3 and the main shaft 16 rotate integrally.

Hereinafter, a control operation of the control device 21 will be described with reference to Fig. 3. As shown in Fig. 3, in the control device 21, dimensions of various tools re previously stored as a data base (step P1).

Before starting with a working operation, dimensions of a tool 3 for actually processing a workpiece is selected from the data base in which dimensions of each tool are previously stored in the step P1 and selected data is set as the reference dimensions. With respect to a respective tool 3, the maximum cleaning times of the tool cleaning portion 20 for cleaning the respective tool 3 is set as the maximum cleaning times (step P2).

In the next, another tool 3 is adapted to the main shaft 16 in a tool exchange step (Step P3), and then the main shaft 16 is rotated (Step P4). In the next, the table 12, the saddle 14 and the main shaft heat 15 are controlled so as to move the tool 3 at a measurement position of the tool dimension measurement device 17 corresponding to a position exactly above the tool dimension measurement device 17. A front end of the tool 3 is moved to a position at where the CCD camera can take an image of the front end of the tool 2 (as shown in Fig. 2) (Step P5).

In the next, it is judged whether a number of times for cleaning the tool 3 by the tool cleaning portion 20 is equal to the maximum cleaning times previously set in the step P2 (Step P6). In accordance with the judgment, if the number of the times for cleaning the tool 3 is equal or less than the maximum cleaning times (YES), cleaning agent is jet toward the tool 3 controlled by the tool cleaning portion 20 so as to clean the tool 3 (Step P7). On the other hand, in accordance with the judgment in the step P6, the number of the times for cleaning the tool 3 is larger than the maximum cleaning number (No), it is judged that some troubles are happened and foreign matters could not be removed by cleaning. Then, the machine is stopped for alarming (Step P13).

After processing the step P7, an image of the front end of the tool 3 is taken by the CCD camera 18. An obtained image is treated so as to find a shape of an object in the obtained image as a process for a tool measurement (step P8). After the process, the shape of the object found from the obtained image is compared to reference shape previously set in the step P9.

That is, in the case that the shape of the object found in the image is coincident with one reference shape within a previously allowable tolerance, it is judged that any foreign matters are not adhered on the tool 3. In the case that the shape of the object found in the image are not coincident with the reference shape previously set in the step P2 due to foreign matters 4 adhered on the tools as shown in Fig. 2, it is judged that foreign matters 4 are adhered on the tool 3.

As the result, it is judged that any foreign matters are not adhered on the tool 3 (YES) based on the obtained image taken by the CCD camera 18, dimensions of tool 3 such as a tool length, a tool diameter and so on are calculated (step P10). On the other hand, it is judged that foreign matters are adhered on the tool 3 (NO), the next step is returned to the step P6.

In the step P11 successive with the step 10, the table 12, the saddle 14 and the main shaft 15 are controlled so as to move the tool 3 at a processing position (for example, a position as shown in Fig. 1) and then the workpiece 2 is begun to be processed (step P12).

Concerning with the registration of the database in the step P1, it is unnecessary to measure dimensions of the tool 3 every time. Such a measurement may be operated, if necessary. In the present embodiment, in the case those foreign matters could not be removed after finishing the maximum cleaning times, the machine is stopped as a n indication of alarming in the step P13. However, the other alarming methods are considerable except the stopping machine. For example, in addition with an alarming indication and so on, various modifications are acceptable within an essence of the present invention.

In order to set the maximum cleaning times, for example, it is preferable to set cleaning times corresponding to a time duration equivalent to a time period while a thermal displacement of a tool becomes stable. In order to measure dimensions of the tool, the measurement is operated with respect to an exchanged tool 3 adapted to the main shaft 16. Of course, it may be operated to measure the tool every time when a workpiece is begun to be processed and at the other timing depending on various occasions.

In accordance with an embodiment of a tool cleaning device for a machine tool according to the present invention, it can be certainly recognized whether foreign matters 4 adhered on the tool 3 are completely removed. Therefore, it is avoided for excessively cleaning the tool 3 on which foreign matters are not adhered and it is also avoided for stopping an operation for cleaning the tool 3 on which foreign matters are still adhered. Thus, the tool 3 can be effectively cleaned.

Alter checking whether the foreign matters 4 adhered on the tool 3 or not, the dimensions of the tool 3 can be measured so that measuring tolerance can be avoided and the dimensions of the tool 3 can be measured with high accuracy. In the case that any foreign matters 4 are adhered on the tool 4, as shown in Fig. 2, such foreign matters 4 can be observed on the display 19a so that the machine tool can be utilized more conveniently.

In addition, an existence of the foreign matters 4 adhered on the tool 3 can be judged by an image treatment. Therefore, it is possible that the cleaning operation with water soluble cleaning agent can be repeated until the foreign matters 4 removed completely. If is unnecessary to utilize dangerous cleaning agents, for example, flammable cleaning agent, cleaning agent harmful to human body and so on. Thus, the machine tool can be operated more safety. A tool cleaning device can be easily adapted to a machine tool having an automatic tool exchange function. The applicant of the present application can recognize that cleaning agent is completely carried in the all direction from the tool 3 by rotating the tool 3 and the measurement with respect to the dimensions of the tool 3 is not baneful influenced in the case that the cleaning agent is a water soluble cleaning agent.

### Industrial Utility

The present invention is applicable for a tool cleaning device for a machine tool, particularly suitable to a tool cleaning device for cleaning a tool before measuring dimensions of the tool in the machine tool.

### Description of Reference Numeral

- 1: machine tool
- 2: workpiece
- 3: tool
- 4: foreign matters
- 11: bed
- 12: table
- 13: column
- 14: saddle
- 15: main shaft head
- 16: main shaft
- 17: tool dimension measuring device
- 18: CCD camera
- 19: display portion
- 20: tool cleaning portion
- 21: control device

## Claims

1. A tool cleaning device for a machine tool, said tool cleaning device for removing foreign matters adhered on a tool before measuring dimensions of said tool, said tool cleaning device **characterized** of comprising:
image taking means for taking an image of a front end of a tool from a side direction;
tool cleaning means for cleaning said tool by jetting cleaning agent toward said tool; and
control means for judging whether foreign matters are attached on said tool in accordance with said image taken by said image taking means and controlling said tool cleaning means in accordance with a fact whether said foreign matters are still adhered on said tool.

2. A tool cleaning device for a machine tool as claimed in claim 1, said tool cleaning device **characterized** of comprising display means for displaying said image taken by said image taking means.

3. A tool cleaning device for a machine tool as claimed in claim 1 or claim 2, said tool cleaning device **characterized in that** said control means judges whether foreign matters are still adhered on said tool by comparing with a shape of said tool previously set.

4. A tool cleaning device for a machine tool as claimed in claim 3, said tool cleaning device **characterized in that** said control means control said tool cleaning means by considering the maximum cleaning number previously set.

5. A tool cleaning device for a machine tool as claimed in claim 4, said tool cleaning device **characterized in that** said control means alarms in the case that cleaning times for said tool by said tool cleaning means is more than the maximum cleaning times.

6. A tool cleaning device for a machine tool as claimed in claim 1, said tool cleaning device is **characterized in that** said control means measure dimensions of said tool in the case that it is judged no foreign matters adhered on said tool.
